# EUROPEAN PATENT SPECIFICATION

(11) **EP 2 905 587 B1**
(45) Date of publication and mention of the grant of the patent: **06.09.2017**
(21) Application number: 15150665.6
(22) Date of filing: 09.01.2015
(51) Int. Cl.: G01G 19/414, B60N 2/00

(54) **OCCUPANT DETECTION DEVICE**
INSASSENERKENNUNGSVORRICHTUNG
DISPOSITIF DE DÉTECTION D'OCCUPANT

(30) Priority: 06.02.2014 US 201414174387
(43) Date of publication of application: 12.08.2015
(73) Proprietor: Delphi Technologies, Inc., Troy MI 48007 (US)
(72) Inventor: Sickon, Richard, P., Rochester Hills, MI 48309 (US); Constable, Robert, K., Kokomo, IN 46902 (US)
(74) Representative: Delphi France SAS

(56) References cited:
- DE-A1- 10 320 287
- JP-A- 2002 307 993
- US-A- 6 087 598
- US-A1- 2007 028 702
- US-A1- 2008 083 290

## Description

### TECHNICAL FIELD OF INVENTION

This disclosure generally relates to weight based vehicle seat occupant detection device, and more particularly relates to a device configured so the deflection or deformation of a return spring in the device is determined by a

### BACKGROUND OF INVENTION

Weight based vehicle seat occupant detection devices are known. Document US6087598A (which corresponds to the preamble of claim 1) relates to a weight sensing apparatus for sensing a load applied to a vehicle seat. However, there is an ongoing desire to reduce the cost of such devices.

### SUMMARY OF THE INVENTION

In accordance with the invention as defined in claim 1, a vehicle seat occupant detection device configured to indicate if a seat of a vehicle is occupied based on a weight of an occupant occupying the seat is provided. The device includes a spring and a sensor. The spring is configured to urge the device toward an unoccupied state. The sensor is configured to cooperate with the spring in order to determine an amount of deflection of the spring.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an exploded side view of a vehicle seat assembly equipped with vehicle seat occupant detection device in accordance with one embodiment;
Fig. 2 is a side view of the vehicle seat occupant detection device of Fig. 1 in accordance with one embodiment; and
Fig. 3 is a perspective cut-away view of the vehicle seat occupant detection device of Fig. 1 in accordance with one embodiment.

### DETAILED DESCRIPTION

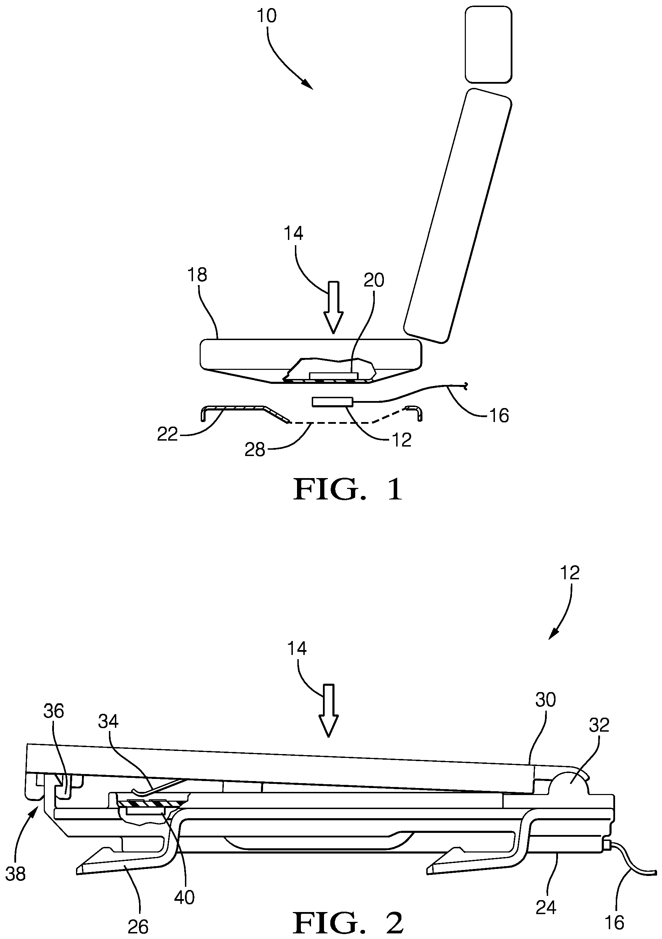

Fig. 1 illustrates a non-limiting example of a vehicle seat assembly, hereafter referred to as the assembly 10, suitable for use in a vehicle such as an automobile. The assembly 10 is equipped with a vehicle seat occupant detection device, hereafter referred to as the device 12. In general, the device 12 is configured to indicate if a seat (i.e. the assembly 10) of a vehicle is occupied based on a weight 14 of an occupant (not shown) occupying the seat. Typically, the device 12 is coupled to an electrical system (not shown) of a vehicle via a wire harness 16. Signals from the device 12 may be used by the vehicle electrical system or occupant protection system to, for example, determine if an airbag should be deployed in the event of a vehicle collision, or convey a reminder to the occupant of the seat to fasten a seat belt (not shown).

The illustration of Fig. 1 is shown as an exploded view for the convenience of explanation. In this non-limiting example, a cushion 18 of the assembly 10 is configured to define a pocket 20 in which the device 12 resides when the cushion 18 is placed upon (i.e. - is in contact with) a frame 22 of the assembly 10. By way of example and not limitation, if the assembly 10 is unoccupied, the device 12 outputs on the wire harness 16 a signal that indicates an unoccupied state. If an occupant or object with the weight 14 above some predetermined threshold resides on the assembly 10, the device 12 outputs on the wire harness 16 a signal that indicates an occupied state.

Fig. 2 illustrates a non-limiting example of the device 12. The device 12 may include a housing 24 that defines tabs 26 that cooperate with a wire portion 28 of the frame 22 to secure the device 12 to the frame 22. In this example, the device 12 includes a cover 30 coupled to the housing 24 by a hinge 32.

The device 12 includes a spring 34 configured to urge the device 12 toward an unoccupied state. The amount of urging by the spring 34 (i.e. the distance urged by the spring) may be limited by, for example, an arrangement of a hook 36 and a slot 38, the configuration of which will be recognized by those in the art. By this arrangement, various electrical components or other parts can be conveniently assembled to the housing 24 or the cover 30 before the hook 36 is engaged with the slot 38, i.e. while the device 12 is 'open'. For reasons that will become apparent in the description that follows, the spring 34 is preferably made from an electrically conductive material such as spring steel, for example ASTM A 666 stainless steel type 301 full hard.

The device 12 also includes a sensor 40 configured to cooperate with the spring 34 in order to determine an amount of deflection of the spring 34 presumably caused by the weight 14 being applied to the device 12 with a countering force being provided by the frame 22. As such, the sensor 40 is configured or adapted to output a signal indicative of a weight 14 of an occupant residing on the seat (the assembly 10). In one embodiment, the sensor 40 is a linear type sensor so that the value of the signal on the wire harness 16 is indicative of the weight 14. Alternatively, the sensor may be a switch so that the signal on the wire harness indicates if the weight 14 is greater than or less than some predetermined threshold. The sensor 40 may advantageously be an inductive sensor or a capacitive sensor so that the sensor 40 is able to directly measure or detect the relative proximity of the spring 34. By way of example and not limitation, a suitable example of the sensor 40 is the Inductance-to-Digital convertor model LDC1000 available from Texas Instruments of Dallas, Texas, USA.

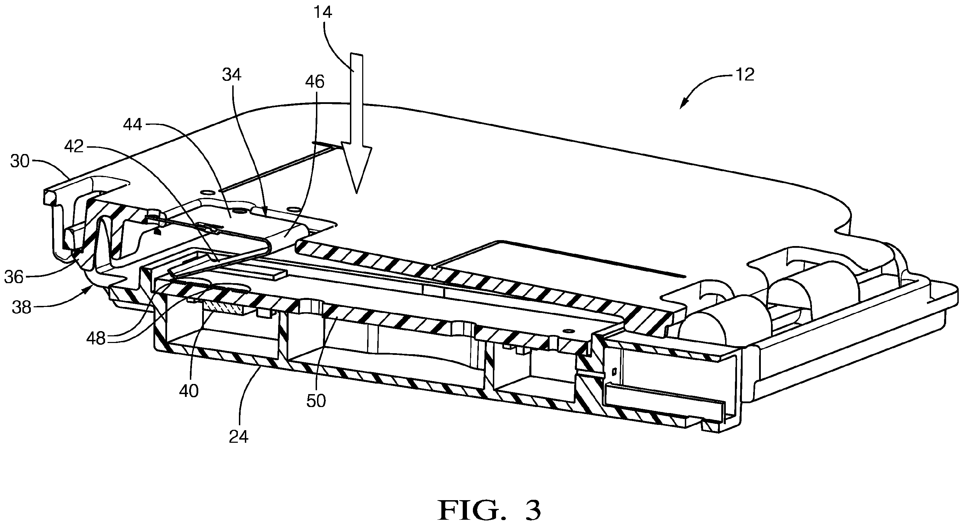

Fig. 3 further illustrates non-limiting details of the device 12. The device 12 may include a printed circuit board 50 to which the sensor 40 is attached by soldering or other means known to those in the art. The printed circuit board 50 may include conductor traces formed of copper alloy and configured to form coils of conductive material used by the sensor 40 as sensing elements 48.

Continuing to refer to Fig. 3, the spring 34 may be referred to by some, according to the definition given in claim 1, as a cantilever type spring. The spring 34 is characterized into various portions that include a beam portion 42 coupled to a base portion 44 by a hinge portion 46. In this non-limiting example, the base portion 44 is rigidly or fixedly coupled to the housing 24, while the beam portion 42 is allowed to flex about the hinge portion 46 as the separation between the housing 24 and the cover 30 is varied by a change in the weight 14 being applied to the device 12. It should be apparent that as the spring 34 is deflected by increasing the weight 14, the angle of the beam portion 42 relative to the sensing elements 48 decreases, thereby increasing the relative proximity of the beam portion 42 (i.e. the spring 34) with respect to the sensing elements 48 which is detected by the sensor 40. That is, as the weight 14 increases, the average separation between the spring 34 and the sensing elements 48 decreases, i.e. the relative proximity increases. As such, the amount of deflection of the spring 34 detected or directly measured by the sensor 40 is based on the relative proximity of the beam portion 42 to the sensing elements 48. It follows that increased relative proximity of the beam portion 42 to the sensing elements 48 or the sensor 40 is indicative of an increase of the weight 14 of an occupant occupying the seat.

Accordingly, a vehicle seat occupant detection device (the device 12) configured to indicate if a seat (the assembly 10) of a vehicle is occupied based on a weight of an occupant occupying the seat is provided. The sensor 40 is configured to cooperate with the spring 34 in order to determine an amount of deflection of the spring 34. As such, the spring 34 serves as both a return spring for the device 12 and as an object of which the sensor 40 is able to determine a relative proximity. Having the spring 34 serve dual purposes reduces the cost of the device 12 since a separate spring and detectable object for the sensor 40 need not be provided.

While this invention has been described in terms of the preferred embodiments thereof, it is not intended to be so limited, but rather only to the extent set forth in the claims that follow.

## Claims

1. A vehicle seat occupant detection device (12) configured to indicate if a seat of a vehicle is occupied based on a weight (14) of an occupant occupying the seat, said device (12) comprising:
a spring (34) configured to urge the device (12) toward an unoccupied state; and
a sensor (40) configured to cooperate with the spring (34) in order to determine an amount of deflection of the spring (34); **characterized in that**
the spring (34) is a cantilever type spring (34) that includes a beam portion (42), a base portion (44) and a hinge portion (46);
the beam portion (42) is coupled to the base portion (44) by the hinge portion (46) and wherein the beam portion (42) is allowed to flex about the hinge portion (46).

2. The device (12) in accordance with claim 1, wherein the sensor (40) is configured to output a variable signal indicative of a weight (14) of an occupant residing on the seat.

3. The device (12) in accordance with claim 1 or 2, wherein the sensor (40) comprises one of an inductive sensor (40) and a capacitive sensor (40).

4. The device (12) according to any one of the preceding claims, wherein the amount of deflection of the spring (34) is based on the relative proximity of the beam portion (42) to the sensor (40).

5. The device (12) according to any one of the preceding claims, wherein increased relative proximity of the beam portion (42) to the sensor (40) is indicative of increased weight (14) of an occupant occupying the seat.

6. A vehicle seat assembly (10) equipped with an occupant detection device (12) according to any one of the preceding claims.

## Patentansprüche

1. Eine Fahrzeugsitzinsassenerfassungsvorrichtung (12), die konfiguriert ist zum Angeben, ob ein Sitz eines Fahrzeugs besetzt ist, basierend auf einem Gewicht (14) eines Insassen, der den Sitz besetzt, wobei die Vorrichtung (12) aufweist:
eine Feder (34), die konfiguriert ist zum Beeinflussen der Vorrichtung (12) hin zu einem unbesetzten Zustand; und
einen Sensor (40), der konfiguriert ist zum Zusammenwirken mit der Feder (34), um ein Ausmaß einer Biegung der Feder (34) zu bestimmen; **dadurch gekennzeichnet, dass**
die Feder (34) eine Feder (34) eines freitragenden Typs ist, die einen Trägerteil (42), einen Basisteil (44) und einen Gelenkteil (46) umfasst;
wobei der Trägerteil (42) mit dem Basisteil (44) über den Gelenkteil (46) gekoppelt ist und wobei sich der Trägerteil (42) um den Gelenkteil (46) biegen kann.

2. Die Vorrichtung (12) gemäß Anspruch 1, wobei der Sensor (40) konfiguriert ist zum Ausgeben eines variablen Signals, das ein Gewicht (14) eines auf dem Sitz befindlichen Insassen angibt.

3. Die Vorrichtung (12) gemäß Anspruch 1 oder 2, wobei der Sensor (40) einen aus einem induktiven Sensor (40) und einem kapazitiven Sensor (40) aufweist.

4. Die Vorrichtung (12) gemäß einem der vorhergehenden Ansprüche, wobei das Ausmaß der Biegung der Feder (34) auf der relativen Nähe des Trägerteils (42) zu dem Sensor (40) basiert.

5. Die Vorrichtung (12) gemäß einem der vorhergehenden Ansprüche, wobei eine größere relative Nähe des Trägerteils (42) zu dem Sensor (40) ein höheres Gewicht (14) eines Insassen, der den Sitz besetzt, angibt.

6. Fahrzeugsitzanordnung (10), die mit einer Insassenerfassungsvorrichtung (12) gemäß einem der vorhergehenden Ansprüche ausgestattet ist.

## Revendications

1. Dispositif de détection d'occupant (12) pour siège de véhicule, configuré pour indiquer si un siège d'un véhicule est occupé, en se basant sur un poids (14) d'un occupant qui occupe le siège, ledit dispositif (12) comprenant :
un ressort (34) configuré pour pousser le dispositif (12) vers un état non occupé ; et
un capteur (40) configuré pour coopérer avec le ressort (34) afin de déterminer une valeur de déflexion du ressort (34) ;
**caractérisé en ce que**
le ressort (34) est un ressort du type en porte-à-faux (34) qui inclut une portion en barreau (42), une portion de base (44) et une portion d'articulation (46) ;
la portion en barreau (42) est couplée à la portion de base (44) par la portion d'articulation (46), et dans lequel la portion en barreau (42) est capable de fléchir autour de la portion d'articulation (46).

2. Dispositif (12) selon la revendication 1, dans lequel le capteur (40) est configuré pour délivrer un signal variable indicatif d'un poids (14) d'un occupant reposant sur le siège.

3. Dispositif (12) selon la revendication 1 ou 2, dans lequel le capteur (40) comprend un capteur parmi un capteur inductif (40) et un capteur capacitif (40).

4. Dispositif (12) selon l'une quelconque des revendications précédentes, dans lequel la valeur de déflexion du ressort (34) est basée sur la proximité relative de la portion en barreau (42) vers le capteur (40).

5. Dispositif (12) selon l'une quelconque des revendications précédentes, dans lequel une augmentation de proximité relative de la portion en barreau (42) vers le capteur (40) est indicative d'une augmentation du poids (14) d'un occupant qui occupe le siège.

6. Ensemble formant siège de véhicule (10) équipé d'un dispositif de détection d'occupant (12) selon l'une quelconque des revendications précédentes.
